# EUROPEAN PATENT SPECIFICATION

(11) **EP 2 278 902 B1**
(45) Date of publication and mention of the grant of the patent: **16.05.2012**
(21) Application number: 09726305.7
(22) Date of filing: 23.03.2009
(51) Int. Cl.: A47J 37/04

(54) **AN APPARATUS FOR STIR-FRYING**
VORRICHTUNG ZUM PFANNENRÜHREN
APPAREIL PERMETTANT DE FAIRE SAUTER LES ALIMENTS

(30) Priority: 28.03.2008 DK 200800461
(43) Date of publication of application: 02.02.2011
(73) Proprietor: GastroProcess Technologies A/S, 2800 Lyngby (DK)
(72) Inventor: ADLER-NISSEN, Jens Lorenz, DK-2900 Hellerup (DK); ERIKSEN, Rasmus Solmer, DK-2100 Copenhagen Ø (DK)
(74) Representative: Høiberg A/S
(86) International application number: PCT/DK2009/050065
(87) International publication number: WO 2009/118011

(56) References cited:
- US-A- 5 664 484
- US-B1- 6 331 323

## Description

### Technical Field

The present invention relates to an apparatus for stir-frying discrete pieces or particles of one or more foodstuffs, the apparatus comprising a heated surface in the form of the interior surface of a portion of a substantially circular cylindrical body, stirring means comprising a helical body or screw having an axis and arranged for rotation at least partly within and in close proximity to the heated surface such that rotation of the helical body transfers the discrete pieces along the cylindrical body substantially parallel to the axis such that the screw and heated surface form a screw conveyor, and scraping elements arranged on the rim of the turns of the screw for scraping the heated surface when the screw rotates so as to remove any layer of material originating from the foodstuffs and adhering to the heated surface.

### Background Art

*Contact frying*, i.e. frying the food by contact with a hot surface (pan-frying, stir-frying) is a wide-spread process in both the kitchen and in the food industry. It is also a desirable process for meeting the increasing demand for industrial ready-made food products of high culinary and nutritional quality. The alternative to contact frying in large scale is *deep-fat frying*, which has its drawbacks by adding significant amounts of low-quality fat to the products and by the risk of toxic compound formation.

US Patent No. 6,331,323 discloses an apparatus of the type indicated above. The apparatus was originally developed to reproduce the Asian stir-frying process (wok frying) in large scale, but experience with its industrial use has indicated that it has a wide application as a generally applicable contact frying process for not only the fine cut vegetables and meat so characteristic of Asian cuisines, but that it can also be used for the searing of larger pieces of meat and other contact frying processes.

### Disclosure of the Invention

The frying/searing at high temperature results in the formation of a brown crust on the pieces of meat and vegetables. The crust compounds, which result from Maillard reactions and other chemical browning reactions, also tend to stick to the frying surface, and eventually they pyrolise and form dark deposits. An extensive formation of dark deposits should be avoided, because the burnt deposits may contaminate the food products and also make cleaning difficult. Regular scraping by means of scrapers of the entire heated surface in contact with the food products is therefore needed to prevent this.

The scrapers must be mounted in a way so that they can exert a certain pressure on the frying surface, and this pressure has to be controlled within limits. The scrapers must also fulfil requirements of hygienic design. Because scrapers are subjected to wear and must be replaced, it is also an advantage that they can be mounted and dismounted easily. Finally, considerations of safety and hygiene speaks for that the scraper arrangement is mounted without the use of nuts, bolts, screws, pins or other small, loose components that may accidentally fall off during operation of the frying machine and end up in the product.

The scrapers disclosed in US 6,331,323 and shown in Figs 1-3 do not comply with all these requirements to a sufficient degree, and therefore it is an object of the present invention to provide scrapers that do comply with such requirements.

This object is achieved by each of the scraping elements comprising:
- a first elongate body made of a resilient material, preferably polyetheretherketone (PEEK), and having a substantially rectilinear scraping surface for engaging and scraping the interior surface of the cylindrical body and a first and a second end portion, and
- a second elongate body made of a resilient material, preferably PEEK, and having a third and a fourth end portion and having a first screw attachment portion located between the third and fourth end portions, preferably equidistantly from the third and fourth end portions,
wherein the first and second elongate bodies are interconnected at a point located between the third end portion and the first screw attachment portion and at a point between the fourth end portion and the first screw attachment portion in such a manner that the second body is spaced from the first body.

Hereby all the listed requirements are fulfilled and the apparatus thereby represents a significant improvement over existing designs of scraper arrangements for use in industrial contact frying. The scraper elements are typically placed on a moving part of the stir-frying apparatus, for example the transport helix described in US 6,331,323. The spring function of the scraper element is an integral part thereof. The integration of the spring function simplifies the construction. The spring function is established by a scraper geometry consisting of a fairly stiff beam supported by flexible long arms parallel to the beam. The beam and arms are loosely confined in slots in the helix. By changing the geometry of the arms, the spring characteristics can be adjusted and controlled.

In the currently preferred embodiment of an apparatus according to the invention, consecutive turns of said screw each are provided with a slot extending transversely, preferably substantially perpendicularly, to the axis, wherein a first slot is adapted to receive the first and third end portions and a second slot is adapted to receive the second and fourth end portions, and wherein a third slot arranged on a turn lying between the two turns provided with the first and second slots is adapted to receive the first screw attachment portion and is provided with a second screw attachment portion adapted to co-operate with the first screw attachment portion to constitute a releasable and pivotable attachment between the second elongate body and the screw such that the scraper element may be releasably attached to the screw such that the first elongate body may pivot around the screw attachment portions.

Hereby a simple, flexible and secure manner of mounting the scraper element on the screw is achieved, and the dismounting of a scraper element for replacement or cleaning is also rendered simple and easy to perform without tools.

Preferably, the scraper element extends at an angle to the axis. Hereby the scraping edge of the scraper element engages the rim of the heated trough at an angle which is conducive to less wear on the scraping edge and less forces on the attachment of the scraper element to the screw rim.

Advantageously, the two slots have lengths less than the dimension of the scraper element measured at right angles to the rectilinear scraping surface, and the first and second elongate bodies each have a substantially rectangular cross section.

Preferably, the interconnection means comprise rods or beams and the first and second bodies and the interconnection means are mutually integral.

So as to attain a simple way of allowing the scraper element to pivot relative to the rim of the screw to compensate for any irregularities in the shaped of the heated surface, the first and second screw attachment means may each comprise a circular cylindrical surface or a spherical surface.

In an alternative embodiment, the second elongate body may comprise two substantially parallel and mutually interconnected beams.

In another aspect, the invention relates to a scraper element for scraping a frying surface of a contact frying apparatus and comprising a first elongate body made of a resilient material, preferably PEEK, polyetheretherketone, and having a substantially rectilinear scraping surface for engaging and scraping the frying surface and a first and a second end portion, and a second elongate body made of a resilient material, preferably PEEK, and having a third and a fourth end portion and having an attachment portion located between the third and fourth end portions, preferably equidistantly from the third and fourth end portions, the attachment portion being adapted for being attached to driving means for driving the scraper across the frying surface, wherein the first and second elongate bodies are interconnected by interconnection means at points located between the third end portion and the attachment portion and between the fourth end portion and the attachment portion in such a manner that the second body is spaced from the first body.

### Brief Description of the Drawings

In the following detailed part of the present description, the invention will be explained in more detail with reference to the exemplary embodiments of a scraper arrangement according to the invention shown in the drawings, in which
Fig. 1 is a schematic perspective view, partly in section, of a prior art apparatus for continuously stir-frying foodstuffs,
Fig. 2 is a schematic enlarged view of a partial cross section taken along line II-II in Fig. 1 with some parts deleted for clarity,
Fig. 3 is a schematic enlarged elevational view of a portion of the helical body or screw of the apparatus of Fig. 1,
Fig. 4 is a diagrammatic lateral elevational view of a stir-frying apparatus according to the invention illustrating the arrangement of a row of scraper elements according to the invention,
Fig. 5 is a diagrammatic view of a portion of the screw of the apparatus in Fig. 4,
Fig. 6 is a diagrammatic sectional view along line X-X in Fig. 5 with the scraper elements removed,
Fig. 7 is a schematic lateral elevational view of a scraper element according to the invention,
Fig. 8 is a view corresponding to Fig. 7 of the scraper element mounted in the apparatus and compressed against the heated surface of the screw conveyor,
Fig. 9 is a view corresponding to Fig. 8 illustrating how the scraper compensates for longitudinal curvature of the heated surface,
Fig. 10 is a schematical perspective view of three turns of the screw and a scraper element pivotably attached and guided in a slot in each of the turns,
Fig. 11 is an enlarged view of the releasable and pivotable attachment of the scraper element in a slot in a turn of the screw,
Fig. 12 is an enlarged cross-sectional view seen in the direction of the axis of the screw with three rows of scraper elements,
Fig. 13 is a view corresponding to Fig. 7 of an alternative embodiment of a scraper according to the invention, and
Fig. 14 is a view in the axial direction of the screw of a section of the screw illustrating the mounting of the scraper of Fig. 13 on the screw edge.

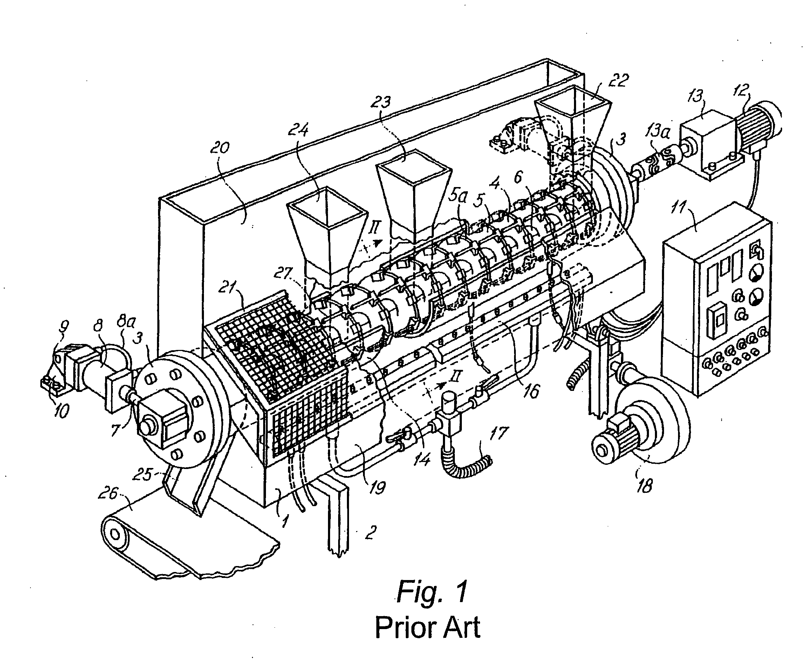

Referring now to Figs. 1-3 a prior art stir-frying apparatus disclosed in US patent No. 6,331,323 comprises a housing 1 carried by support legs 2 and associated with two bearing assemblies 3 in which a helical body or screw conveyor 4 is rotatably journalled, the body 4 comprising a helical plate 5 attached to a shaft 6.

The bearing assemblies 3 at either end of the shaft 6 are each supported by a respective piston rod 7 of a hydraulic cylinder and piston assembly 8 pivotally attached by means of pivot 9 to a bracket 10 bolted to a not shown fixed element alongside the housing 1 or a not shown element fixedly attached to the housing 1.

The helical body or screw 4 is thus suspended movably in a generally vertical direction because of the possibility of pivoting around the pivots 9. The helical body 4 may also be moved substantially horizontally to and fro in a direction transverse to the axis of the shaft 6 by means of the reciprocating action of the piston rods 7 of the cylinder and piston assemblies 8. The assemblies 8 are activated by means of hydraulic fluid supplied through conduits 8a communicating with a hydraulic fluid pump (not shown) controlled by a conventional controlling means (not shown) arranged in a control cabinet 11.

The shaft 6 is at one end connected to an electrical drive unit comprising an electrical motor 12 and a gear box 13 by means of a double universal joint 13a allowing movement of the shaft 6 in all directions transverse to the axis of the shaft relative to the drive unit 12, 13. The drive unit 12, 13 is fixedly arranged relative to the housing 1, and the speed of rotation of the electrical motor 12 is controlled by a conventional controlling means (not shown) in the control cabinet 11.

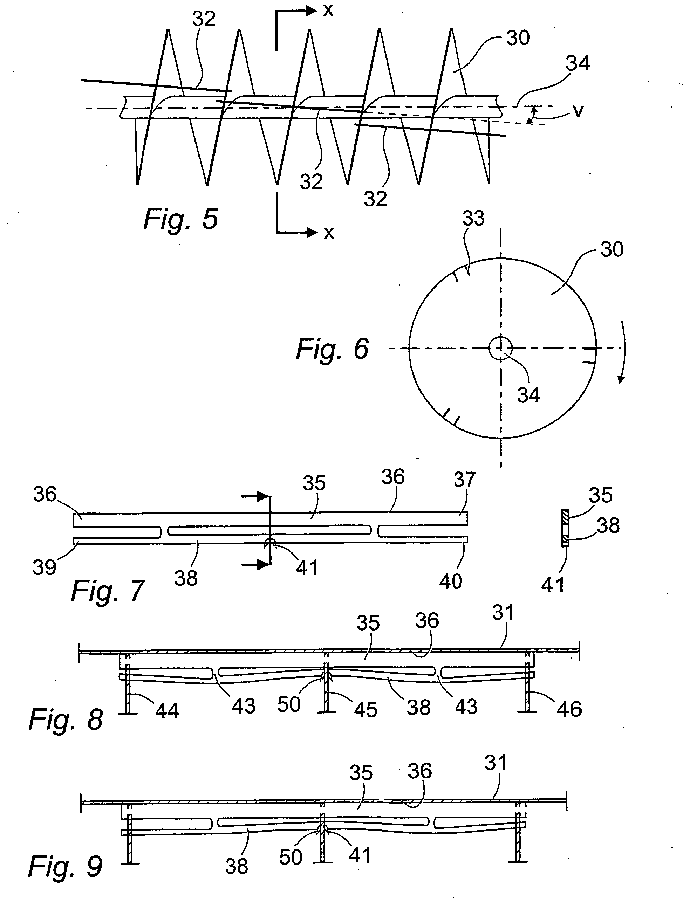

A cylindrical body having a thick-wailed portion 14 and la thin-walled portion 15 is arranged in the housing 1 substantially coaxially with the helical body 4. The thin walled portion is peripherically somewhat longer at one side than the other so that discrete pieces of foodstuff transported by the helical body 4 as indicated by the arrow T in Fig. 7 will not be pushed out of the cylindrical body. The portion 14 is heated by means of an elongate gas burner assembly 16 arranged in the housing 1 below the cylindrical body 14, 15.

Gas for the gas burner assembly 16 is supplied through a gas conduit 17, and air for combustion as well as odour removing ventilation is supplied by a fan 18 communicating with a combustion chamber 19 arranged in the lower part of the housing 1 and accommodating the gas burner assembly 16. Exhaust gases from the combustion and ventilating air are removed from the housing through a venting portion 20 of the housing 1. The portion 15 may also have the same thickness as the portion 14.

A protecting wire mesh 21 is arranged over the helical body 4, 5 and the cylindrical body 14, 15 to avoid accidents caused by introduction of any object or a hand into the elongate aperture 21 at the top of the cylindrical body 14, 15. Foodstuff introduction funnels 22-24 are arranged on the housing 1 for introducing finely cut or diced foodstuffs through the aperture 21 into the cylindrical body 14, 15 at different points along the length thereof. The funnels 22-24 penetrate apertures therefore in the wire mesh 21.

At the outlet end of the cylindrical body 14, 15 opposite the inlet end thereof adjacent the drive unit 13, 14 an outlet aperture (not shown) in the bottom of the portion 14 communicates with a ramp member 25 for transferring stir-fried foodstuffs from the cylindrical body to a conveyor 26 for transferring the foodstuffs to further processing apparatus or storage means (not shown).

The axis of the helical body 4, 5 and the cylindrical body 14, 15 is inclined slightly upwards from the inlet end to the outlet end. The inclination is adjustable by means of adjustment elements (not shown) that allow tilting the apparatus or part of same to adjust the inclination of said axis so that the axis also may be horizontal or inclined downwards from the inlet end towards then outlet end.

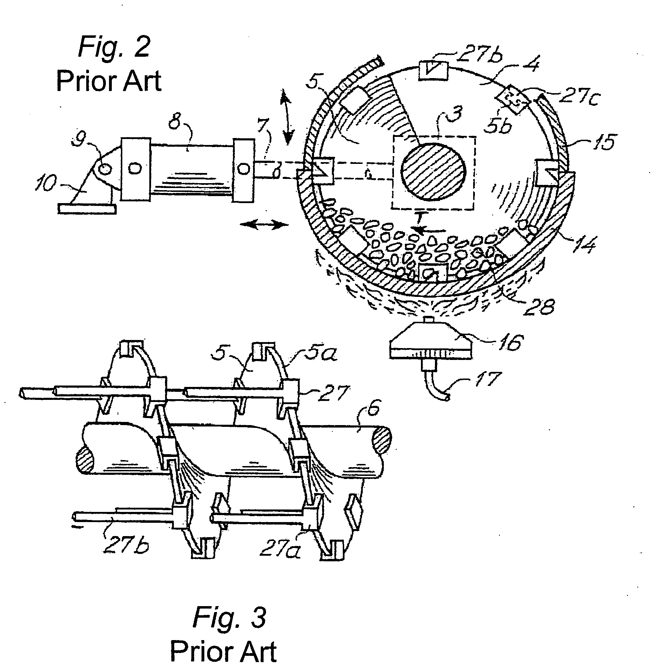

The helical rim 5a of the helical plate 5 is along the entire length thereof provided with a series of equally spaced scraping and stirring elements 27, some solely comprising a scraping portion 27a and the rest additionally a stirring/scraping portion 27b, the elements 27 being firmly and removably attached to the helical rim by locking engagement of a locking projection 27c of the element 27 in a corresponding locking recess 5b in the rim 5a of the plate (shown with broken lines in Fig. 2) or alternatively or additionally, for instance, by frictional clamping engagement between the element 27 and the rim 5a.

The elements 27 are made of a suitable material having good wear properties such as a suitable plastic material such as Teflon or of stainless steel.

In use, discrete pieces 28 (Fig. 2) of finely cut or diced foodstuffs such as vegetables or meat are introduced through the funnel 22 together with an optional frying substance such as oil or fat, and further discrete pieces and optionally further frying substance may be introduced through funnels 23 and 24.

The cylindrical portion 14 is heated to a predetermined temperature controlled by conventional controlling means (not shown) controlling the gas burner gas consumption in dependency of temperature measurements via not shown conventional thermometer means arranged for measuring the temperature of the portion 14.

The helical body 4, 5 is rotated at a predetermined and variable speed of rotation depending on the foodstuffs to be fried and the temperature of the cylindrical portion 14. The co-operation between the helical body 4, 5, the scraping/stirring elements 27 and the interior surface of the cylindrical portion 14 serves to move the discrete pieces 28 forward along the inner surface of the cylindrical portion 14 substantially parallel to the axis thereof, while at the same time stirring them so as to continuously bring new surface portions of the discrete pieces 28 into heat conducting contact with the heated inner surface of the cylindrical portion 14.

Any excess fluid frying substance will tend to remain near the inlet end below the funnel 22 because of the slight inclination upwards from inlet end to outlet end of the body 14, 15. The scraping/stirring elements 27 are pressed against the interior surface of the cylindrical portion 14 by the effect of the weight of the helical body 4, 5 as the entire weight of same is supported by the cylindrical portion 14 because of the pivotable suspension of the assemblies 8.

Thereby, removal by scraping of any layer of foodstuff adhering to the interior surface of the cylindrical portion 14 will be assured so that any such layer will not carbonize and degrade the taste and odour of the stir-fried product.

So as to ensure that the entire area of the interior surface of the cylindrical portion 14 contacted by the discrete pieces 28 during the stir-frying is scraped clean by the scraping elements 27, the helical body 4, 5 is moved in a direction transverse to the axis thereof by means of the cylinder piston assembly 8, the piston rod 7 being reciprocated so that the helical body 4, 5 is forced to move transversely such that region of maximum pressure between the elements 27 and the interior surface of the cylindrical portion 14 moves to and fro along the circumference thereof such that maximum scraping pressure is intermittently applied to substantially the entire inner surface of the heated cylindrical portion 14.

This transverse movement of the helical body is allowed relative to the drive unit 12, 13 by the double universal joint 13a. This effect may also be obtained by mounting the drive unit for transverse movement together with the helical body or by arranging the motor 12 laterally relative to the helical body and replacing the gear box 13 by a chain and sprocket wheel interconnection to the shaft 6.

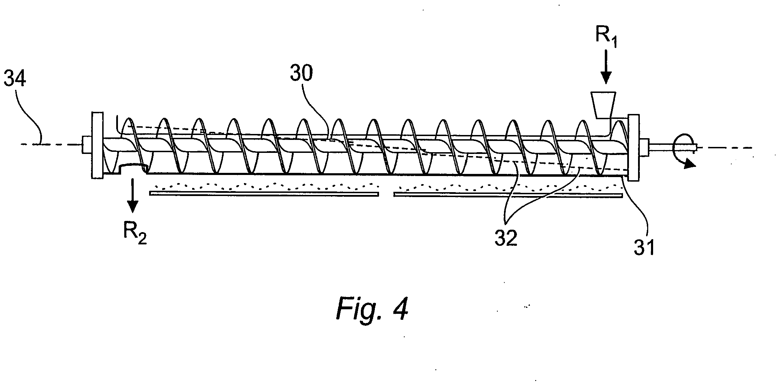

Although the prior art scrapers described above function reasonably well, a large number of potentially loose parts are in use and therefore a new improved scraper arrangement according to the invention and illustrated in Figs.4-13 has been developed.

Referring now to Figs. 4-6, a helix or screw 30 is rotatably mounted in a circular cylindrical casing 31 heated from below by natural gas. A row of scrapers 32 that will be described more in detail below are shown mounted in slots 33 on the rim of the turns of the screw. The scrapers are placed at an angle v (see Fig. 5) relative to the axis 34 of the screw for ensuring a smooth contact between the scrapers and the frying surface of the casing during rotation of the helix. The number of rows of scrapers can be from two to six depending on the specific use of the apparatus. In Fig. 6, the possibility of mounting three rows of scrapers is exemplified.

Referring now to Figs 7-11, a scraper 32 according to the invention comprises a first elongate body or scraping beam 35 having a substantially planar and rectilinear scraping surface 36 for engaging and scraping the frying surface. The beam 35 has a first end portion 36 and a second end portion 37.

The scraper 32 also comprises a second elongate body or biasing beam 38 having a third end portion 39 and a fourth end portion 40 and a central first screw attachment portion 41 provided with a concave circular cylindrical surface portion. The scraping beam 35 is interconnected with the biasing beam 38 by means of two rigid rods or beams 43.

Three consecutive turns 44-46 of the screw 30 are provided with slots 47-49, respectively, extending from the rim of the turns towards the axis of the screw. The bottom of the slot 48 of the intermediate turn 45 is provided with a second screw attachment portion 50 having a convex circular cylindrical surface portion 51 in pivotable contact with surface portion 42 of the beam 38.

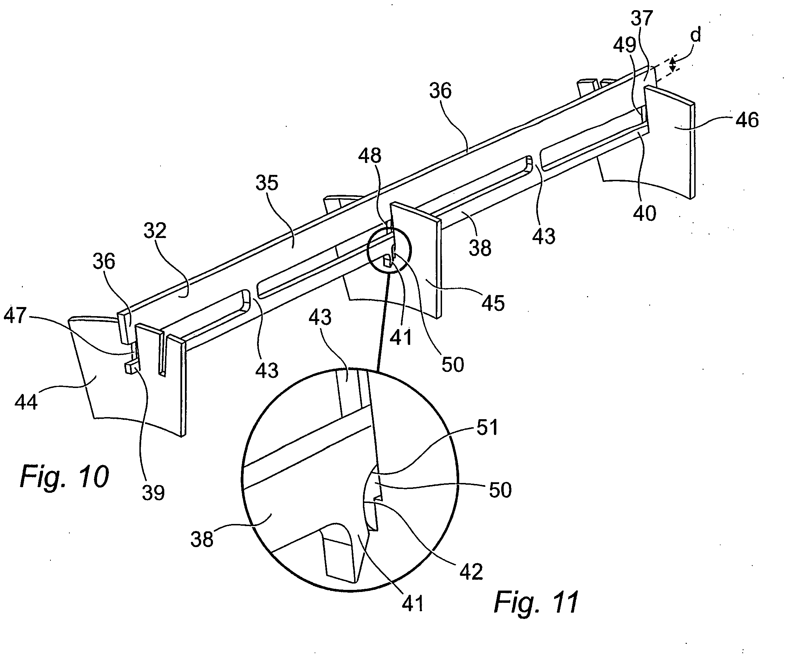

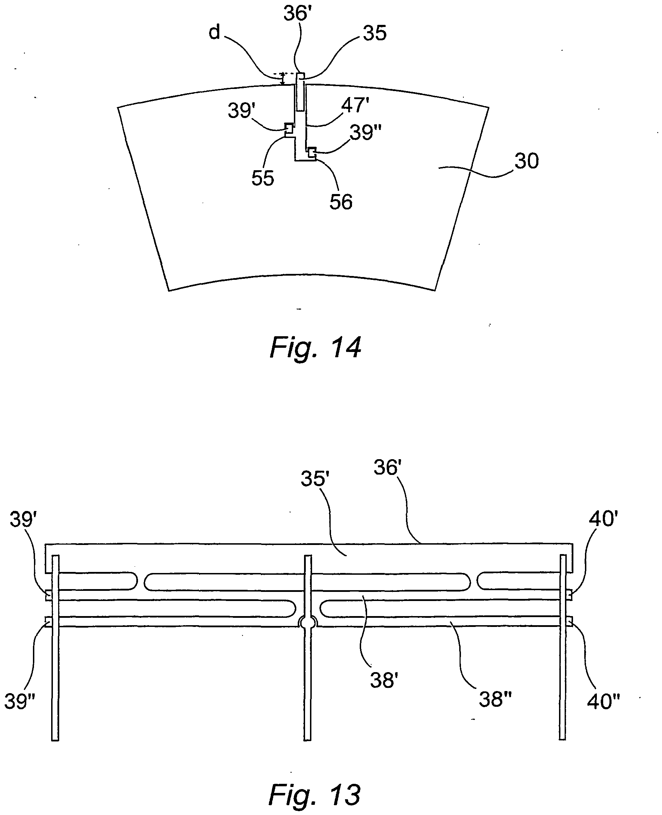

The depth or radial extent of the slots 47-49 is such relative to the total height or dimension of the scraper 32 at right angles to the scraping surface 36 that the beam 35 projects a certain distance d outside the slots as shown in exaggeration in Figs. 10, 12 and 14. The beam 35 projects a distance d between 3 and 10 mm outside the slots such that when the beam is pressed against the frying surface, the spring or biasing function of beam 38 is activated as shown in Figs. 13 and 14.

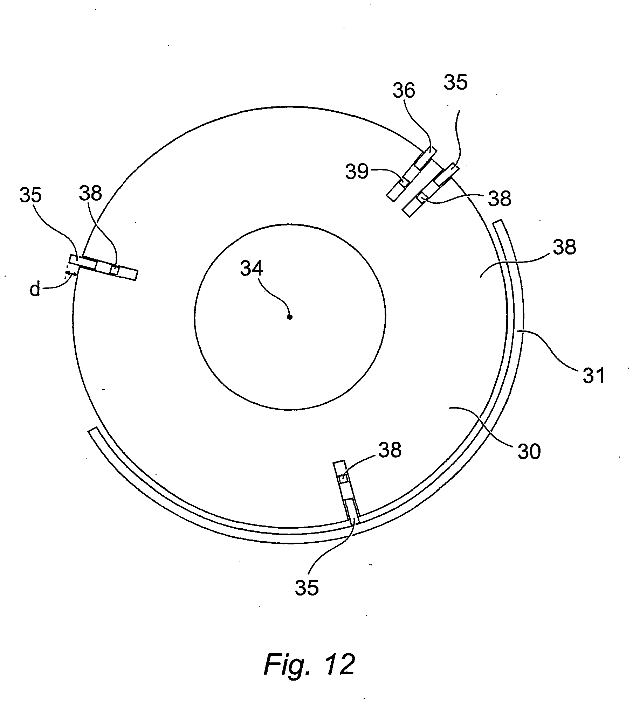

When, during rotation of the screw, the beam 35 encounters the edge of the casing 31 (see Fig. 12) then, because of the angle v between the scraper and the axis 34, the scraper is compressed as the beam 35 is urged inwards by the casing. This causes the end portions 39 and 40 and the attachment portion 41 to press against the bottom of the slots 39, 40 and 41, respectively. Hereby the situation shown in Fig. 8 arises where the beam 38 flexes and transmits a scraping counter-pressure against the frying surface to the scraping surface 36 of the beam 35 through the interconnections 43.

The frying surface is not perfectly rectilinear in the direction of the cylinder axis for a number of reasons, primarily because of the effect of heating the casing from the bottom which gives rise to a slight "banana" shape, i.e. an upwards concave arcuate shape. To ensure that the angle of the scraping surface 36 can vary to accommodate this arcuate shape and maintain an effective scraping contact with the frying surface it is important that the scraper can pivot around the screw attachment portions 41 and 50 as shown in Fig. 9. The screw attachment means can be constructed in other manners than shown, for instance the concave cylindrical surface 42 may be arranged on the portion attached to the screw or the cylindrical surfaces may be substituted by co-operating concave and convex spherical surfaces.

Because of the resiliency and flexibility of the scraper elements is not necessary to employ the relatively complicated support elements for supporting the shaft as shown in Figs. 1-3.

The beams 35 and 38 do not necessarily have to be rectangular in cross section as long as the scraping surface 36 is substantially rectilinear.

The material of the scraper is preferably PEEK, but other resilient materials such as Nylon and Teflon or any other resilient food-approved materials may be employed.

Although it is preferred that the scraper spans over three turns of the screw, it is envisioned that longer scrapers spanning 4 or more turns may be useful and perhaps have the advantage of ease of replacement.

Referring now to Figs. 14-15, an alternative embodiment of a scraper according to the invention is illustrated. This embodiment differs from the previously described scraper in that there are two biasing beams 38' and 38" having ends 39', 39" and 40', 40" inserted in slots in the screw, one of which 47' is illustrated in Fig. 14.

The slot 47' is provided with bayonet-type locking recesses 55 and 56 for receiving and locking the beam ends 39' and 39", respectively such that the scraper is maintained in position during use, but easily can be removed and inserted for replacement or cleaning.

## Claims

1. An apparatus for stir-frying discrete pieces or particles of one or more foodstuffs, the apparatus comprising
- a heated surface in the form of the interior surface of a portion of a substantially circular cylindrical body,
- stirring means comprising a helical body or screw (44,45,46) having an axis and arranged for rotation at least partly within and in close proximity to said heated surface such that rotation of said helical body transfers the discrete pieces along said cylindrical body substantially parallel to said axis such that said screw and heated surface form a screw conveyor, and
- scraping elements (32) arranged on the rim of the turns of said screw for scraping said heated surface when said screw rotates so as to remove any layer of material originating from the foodstuffs and adhering to said heated surface,
**characterized in that**
each of said scraping elements comprises
- a first elongate body (35) made of a resilient material, preferably polyetheretherketone (PEEK), and having a substantially rectilinear scraping surface (36) for engaging and scraping said interior surface and a first and a second end portion, and
- a second elongate body (38) made of a resilient material, preferably PEEK, and having a third and a fourth end portion and having a first screw attachment portion (41) located between said third and fourth end portions, preferably equidistantly from said third and fourth end portions,
wherein said first and second elongate bodies (35, 38) are interconnected at a point located between said third end portion and said first screw attachment portion and at a point between said fourth end portion and said first screw attachment portion in such a manner that said second body (38) is spaced from said first body (35).

2. An apparatus according to claim 1, wherein consecutive turns of said screw each are provided with a slot extending transversely, preferably substantially perpendicularly, to said axis,
wherein a first slot is adapted to receive said first and third end portions and a second slot is adapted to receive said second and fourth end portions, and
wherein a third slot arranged on a turn lying between the two turns provided with said first and second slots is adapted to receive said first screw attachment portion and is provided with a second screw attachment portion adapted to co-operate with said first screw attachment portion to constitute a releasable and pivotable attachment between said second elongate body and said screw such that said scraper element may be releasably attached to said screw such that said first elongate body may pivot around said screw attachment portions.

3. An apparatus according to claim 1 or 2, wherein said scraper element extends at an angle to said axis.

4. An apparatus according to claim 2 or 3, wherein said two slots have lengths less than the dimension of said scraper element measured at right angles to said rectilinear scraping surface.

5. An apparatus according to any of the preceding claims, wherein said first and second elongate bodies each have a substantially rectangular cross section.

6. An apparatus according to any of the preceding claims, wherein said interconnection means comprise rods or beams.

7. An apparatus according to any of the preceding claims, wherein said first and second bodies and said interconnection means are mutually integral.

8. An apparatus according to any of the preceding claims, wherein said first and second screw attachment means each comprise a circular cylindrical surface.

9. An apparatus according to any of the claims 1-7, wherein said first and second screw attachment means each comprise a spherical surface.

10. An apparatus according to any of the preceding claims, wherein said second elongate body comprises two substantially parallel and mutually interconnected beams.

11. A scraper element for scraping a frying surface of a contact frying apparatus and comprising:
- a first elongate body (35) made of a resilient material, preferably PEEK, polyetheretherketone, and having a substantially rectilinear scraping surface for engaging and scraping said frying surface and a first and a second end portion, and
- a second elongate body (38) made of a resilient material, preferably PEEK, and having a third and a fourth end portion and having an attachment portion (41) located between said third and fourth end portions, preferably equidistantly from said third and fourth end portions, said attachment portion being adapted for being attached to driving means for driving said scraper across said frying surface
wherein said first and second elongate bodies (35,38) are interconnected by interconnection means at points located between said third end portion and said attachment portion and between said fourth end portion and said attachment portion in such a manner that said second body (38) is spaced from said first body (35).

12. A scraper element according to claim 11, wherein said first and second elongate bodies each have a substantially rectangular cross-section.

13. A scraper element according to claim 11 or 12, wherein said interconnection means comprise rods or beams.

14. A scraper element according to any of the claims 11-13, wherein said first and second bodies and said interconnection means are mutually integral.

15. A scraper element according to any of the claims 11-14, wherein said attachment portion is adapted to allow pivoting of said scraper relative to said driving means.

16. A scraper element according to any of the claims 11-15, wherein said attachment portion comprises a circular cylindrical surface.

17. A scraper element according to any of the claims 11-15, wherein said attachment portion comprises a spherical surface.

18. A scraper element according to any of the claims 11-17, wherein said second elongate body comprises two substantially parallel and mutually interconnected beams.

## Patentansprüche

1. Vorrichtung zum Pfannenrührbraten einzelner Teile oder Partikel von einem oder mehreren Nahrungsmitteln, wobei die Vorrichtung aufweist
- eine beheizte Oberfläche in Form einer Innenoberfläche eines Abschnitts eines im Wesentlichen kreiszylindrischen Körpers,
- eine Rühreinrichtung, die einen schraubenförmigen Körper oder eine Schraube (44, 45, 46) aufweist, mit einer Achse und in der Lage ist, sich wenigstens teilweise zu drehen mit und in enger Nachbarschaft zu der beheizten Oberfläche, derart, dass die Drehung des schraubenförmigen Körpers die einzelnen Teile entlang des zylindrischen Körpers im Wesentlichen parallel zu der Achse bewegt, derart, dass die Schraube und die beheizte Oberfläche einen Schraubenförderer bilden, und
- Kratzerelemente (32), die an dem Rand der Gänge der Schraube angeordnet sind, um die beheizte Oberfläche abzukratzen, wenn sich die Schraube dreht, um so jegliche Schicht von Material, die von den Nahrungsmitteln stammt und an der beheizten Oberfläche anhaftet, zu entfernen,
**dadurch gekennzeichnet, dass** ein jedes der Kratzerelemente aufweist
- einen ersten länglichen Körper (35), der aus einem nachgiebigen Material gebildet ist, vorzugsweise Polyetherketon (PEEK), und eine im Wesentlichen rechteckige Kratzoberfläche (36) aufweist zum Eingriff und zum Kratzen der Innenoberfläche und einen ersten und einen zweiten Endabschnitt, und
- einen zweiten länglichen Körper (38), der aus einem nachgiebigen Material, vorzugsweise PEEK gebildet ist, und einen dritten und vierten Endabschnitt und einen ersten Schraubenbefestigungsabschnitt (41) aufweist, der zwischen dem dritten und vierten Endabschnitt, vorzugsweise mit gleichem Abstand von dem dritten und vierten Endabschnitt, angeordnet ist,
wobei der erste und zweite längliche Körper (35, 38) an einem Punkt miteinander verbunden sind, der zwischen dem dritten Endabschnitt und dem ersten Schraubenbefestigungsabschnitt und an einem Punkt zwischen dem vierten Endabschnitt und dem ersten Schraubenbefestigungsabschnitt derart angeordnet ist, dass der zweite Körper (38) von dem ersten Körper (35) beabstandet ist.

2. Vorrichtung nach Anspruch 1, wobei aufeinander folgende Gänge der Schraube jeweils mit einem Schlitz versehen sind, der sich quer, bevorzugt im Wesentlichen senkrecht, zu der Achse erstreckt,
wobei ein erster Schlitz in der Lage ist, den ersten und dritten Endabschnitt aufzunehmen und ein zweiter Schlitz in der Lage ist, den zweiten und vierten Endabschnitt aufzunehmen, und
wobei ein dritter Schlitz auf einem Gang angeordnet ist, der zwischen den beiden Gängen liegt, die mit dem ersten und zweiten Schlitz versehen sind, in der Lage ist den ersten Schraubenbefestigungsabschnitt aufzunehmen, und mit einem zweiten Schraubenbefestigungsabschnitt versehen ist, der in der Lage ist, mit dem ersten Schraubenbefestigungsabschnitt zusammenzuwirken, um eine lösbare und schwenkbare Befestigung zwischen dem zweiten länglichen Körper und der Schraube zu bilden, derart, dass das Kratzerelement lösbar an der Schraube befestigt ist, derart, dass der erste längliche Körper um die Schraubenbefestigungsabschnitte schwenken kann.

3. Vorrichtung nach Anspruch 1 oder 2, wobei das Kratzerelement sich in einem Winkel zu der Achse erstreckt.

4. Vorrichtung nach Anspruch 2 oder 3, wobei die beiden Schlitze Längen aufweisen, die geringer sind als die Abmessung des Kratzerelements, gemessen unter rechten Winkeln zu der geradlinigen Kratzoberfläche.

5. Vorrichtung nach einem der vorhergehenden Ansprüche, wobei der erste und der zweite längliche Körper jeweils einen im Wesentlichen rechteckigen Querschnitt aufweisen.

6. Vorrichtung nach einem der vorhergehenden Ansprüche, wobei die Verbindungseinrichtung Stangen oder Balken aufweist.

7. Vorrichtung nach einem der vorhergehenden Ansprüche, wobei der erste und der zweite Körper und die Verbindungseinrichtung untereinander integral sind.

8. Vorrichtung nach einem der vorhergehenden Ansprüche, wobei die erste und die zweite Schraubenbefestigungseinrichtung jeweils eine kreiszylindrische Oberfläche aufweisen.

9. Vorrichtung nach einem der Ansprüche 1 bis 7, wobei die erste und zweite Schraubenbefestigungseinrichtung jeweils eine kugelige Oberfläche aufweisen.

10. Vorrichtung nach einem der vorhergehenden Ansprüche, wobei der zweite längliche Körper zwei im Wesentlichen parallele untereinander verbundene Balken aufweist.

11. Kratzerelement zum Kratzen einer Apparatoberfläche einer Kontaktbratvorrichtung und aufweisend:
- einen ersten länglichen Körper (35), der aus einem nachgiebigen Material, bevorzugt PEEK, Polyetherketon, gebildet ist und eine im Wesentlichen geradlinige Kratzoberfläche zum Eingriff und Kratzen der Bratoberfläche und einen ersten und einen zweiten Endabschnitt aufweist, und
- einen zweiten länglichen Körper (38), der aus einem nachgiebigen Material, bevorzugt PEEK, gebildet ist, und einen dritten und vierten Endabschnitt aufweist und einen Befestigungsabschnitt (41) aufweist, der zwischen dem dritten und vierten Endabschnitt, bevorzugt gleich beabstandet von dem dritten und vierten Endabschnitt, angeordnet ist, wobei der Befestigungsabschnitt in der Lage ist an einer Antriebseinrichtung befestigt zu werden, zum Antreiben des Kratzers über die Bratoberfläche,
wobei der erste und zweite längliche Körper (35, 38) miteinander verbunden sind durch eine Zwischenverbindungseinrichtung an Punkten, die sich zwischen dem dritten Endabschnitt und dem Befestigungsabschnitt und zwischen dem vierten Endabschnitt und dem Befestigungsabschnitt auf solche Weise befinden, dass der zweite Körper (38) von dem ersten Körper (35) beabstandet ist.

12. Kratzerelement nach Anspruch 11, wobei der erste und zweite längliche Körper jeweils einen im Wesentlichen rechteckigen Querschnitt aufweisen.

13. Kratzerelement nach Anspruch 11 oder 12, wobei die Zwischenverbindungseinrichtung Stangen oder Balken aufweist.

14. Kratzerelement nach einem der Ansprüche 11 bis 13, wobei der erste und der zweite Körper und die Zwischenverbindungseinrichtung untereinander integral sind.

15. Kratzerelement nach einem der Ansprüche 11 bis 14, wobei die Befestigungseinrichtung in der Lage ist, ein Schwenken des Kratzers bezüglich des Antriebsmechanismus' zu erlauben.

16. Kratzerelement nach einem der Ansprüche 11 bis 15, wobei der Befestigungsabschnitt eine kreiszylindrische Oberfläche aufweist.

17. Kratzerelement nach einem der Ansprüche 11 bis 15, wobei der Befestigungsabschnitt eine kugelige Oberfläche aufweist.

18. Kratzerelement nach einem der Ansprüche 11 bis 17, wobei der zweite längliche Körper zwei im Wesentlichen parallele und untereinander verbundene Balken aufweist.

## Revendications

1. Appareil permettant de faire sauter des morceaux ou des particules distincts d'une ou plusieurs denrées alimentaires, l'appareil comprenant
- une surface chauffée sous la forme de la surface intérieure d'une portion d'un corps cylindrique sensiblement circulaire,
- un moyen pour remuer comprenant un corps hélicoïdal ou une vis (44, 45, 46) ayant un axe et agencé afin de tourner au moins en partie dans et à proximité étroite de ladite surface chauffée de telle sorte que la rotation dudit corps hélicoïdal transfère les morceaux distincts le long dudit corps cylindrique sensiblement parallèle audit axe de sorte que lesdites vis et surface chauffée forment un convoyeur à vis, et
- des éléments de raclage (32) agencés sur le bord des spires de ladite vis afin de racler ladite surface chauffée lorsque ladite vis tourne afin de retirer toute couche de matériau provenant des denrées alimentaires et adhérant à ladite surface chauffante,
**caractérisé en ce que**
chacun desdits éléments de raclage comprend
- un premier corps allongé (35) constitué d'un matériau résilient, de préférence de poly(étheréthercétone) (PEEK), et ayant une surface de raclage (36) sensiblement rectiligne permettant de venir en contact avec et de racler ladite surface intérieure et une première et une deuxième portions d'extrémité, et
- un second corps allongé (38) constitué d'un matériau résilient, de préférence de PEEK et ayant des troisième et quatrième portions d'extrémité et ayant une première portion de fixation de vis (41) située entre lesdites troisième et quatrième portions d'extrémité, de préférence à équidistance desdites troisième et quatrième portions d'extrémité,
dans lequel lesdits premier et second corps allongés (35, 38) sont interconnectés à un point situé entre ladite troisième portion d'extrémité et ladite première portion de fixation de vis et au niveau d'un point entre ladite quatrième portion d'extrémité et ladite première portion de fixation de vis de telle sorte que ledit second corps (38) est espacé dudit premier corps (35).

2. Appareil selon la revendication 1, dans lequel des spires consécutives de ladite vis sont chacune dotée d'une fente s'étendant transversalement, de préférence sensiblement perpendiculairement, audit axe,
dans lequel une première fente est adaptée pour recevoir lesdites première et troisième portions d'extrémité et une deuxième fente est adaptée pour recevoir lesdites deuxième et quatrième portions d'extrémité, et
dans lequel une troisième fente agencée sur une spire se trouvant entre les deux spires dotées desdites première et deuxième fentes est adaptée pour recevoir ladite première portion de fixation de vis et est dotée d'une seconde portion de fixation de vis adaptée pour coopérer avec ladite première portion de fixation de vis afin de constituer une fixation libérable et pivotable entre ledit second corps allongé et ladite vis de sorte que ledit élément de racloir peut être fixé de façon libérable à ladite vis de sorte que ledit premier corps allongé peut pivoter autour desdites portions de fixation de vis.

3. Appareil selon la revendication 1 ou 2, dans lequel ledit élément de racloir forme un angle avec ledit axe.

4. Appareil selon la revendication 2 ou 3, dans lequel lesdites deux fentes ont des longueurs inférieures à la dimension dudit élément de racloir mesurée à angle droit par rapport à ladite surface de raclage rectiligne.

5. Appareil selon l'une quelconque des revendications précédentes, dans lequel lesdits premier et second corps allongés ont chacun une section sensiblement rectangulaire.

6. Appareil selon l'une quelconque des revendications précédentes, dans lequel lesdits moyens d'interconnexion comprennent des tiges ou des montants.

7. Appareil selon l'une quelconque des revendications précédentes, dans lequel lesdits premier et second corps et lesdits moyens d'interconnexion sont mutuellement solidaires.

8. Appareil selon l'une quelconque des revendications précédentes, dans lequel lesdits premier et second moyens de fixation de vis comprennent chacun une surface cylindrique circulaire.

9. Appareil selon l'une quelconque des revendications 1 à 7, dans lequel lesdits premier et second moyens de fixation de vis comprennent chacun une surface sphérique.

10. Appareil selon l'une quelconque des revendications précédentes, dans lequel ledit second corps allongé comprend deux montants sensiblement parallèles et mutuellement interconnectés.

11. Elément de racloir permettant de racler une surface de friture d'un appareil à frire en contact et comprenant :
- un premier corps allongé (35) constitué d'un matériau résilient, de préférence de PEEK, la poly(étheréthercétone), et ayant une surface de raclage sensiblement rectiligne permettant de venir en contact avec et racler ladite surface de friture et des première et deuxième portions d'extrémité, et
- un second corps allongé (38) constitué d'un matériau résilient, de préférence de PEEK, et ayant des troisième et quatrième portions d'extrémité et ayant une portion de fixation (41) située entre lesdites troisième et quatrième portions d'extrémité, de préférence de façon équidistante desdites troisième et quatrième portions d'extrémité, ladite portion de fixation étant adaptée pour être fixée à des moyens d'entraînement permettant d'entraîner ledit racloir à travers ladite surface de friture
dans lequel lesdits premier et second corps allongés (35, 38) sont interconnectés par des moyens d'interconnexion au niveau de points situés entre ladite troisième portion d'extrémité et ladite portion de fixation et entre ladite quatrième portion d'extrémité et ladite portion de fixation de telle sorte que ledit second corps (38) est espacé dudit premier corps (35).

12. Elément de racloir selon la revendication 11, dans lequel lesdits premier et second corps allongés ont chacun une section sensiblement rectangulaire.

13. Elément de racloir selon la revendication 11 ou 12 dans lequel lesdits moyens d'interconnexion comprennent des tiges ou des montants.

14. Elément de racloir selon l'une quelconque des revendications 11 à 13, dans lequel lesdits premier et second corps et lesdits moyens d'interconnexion sont mutuellement solidaires.

15. Elément de racloir selon l'une quelconque des revendications 11 à 14, dans lequel ladite portion de fixation est adaptée pour permettre le pivotement dudit racloir par rapport audit moyen d'entraînement.

16. Elément de racloir selon l'une quelconque des revendications 11 à 15, dans laquelle ladite portion de fixation comprend une surface cylindrique circulaire.

17. Elément de racloir selon l'une quelconque des revendications 11 à 15, dans laquelle ladite portion de fixation comprend une surface sphérique.

18. Elément de racloir selon l'une quelconque des revendications 1 à 17, dans lequel ledit second corps allongé comprend deux montants sensiblement parallèles et mutuellement interconnectés.
